# EUROPÄISCHE PATENTSCHRIFT

(11) **EP 2 846 986 B1**
(45) Veröffentlichungstag und Bekanntmachung des Hinweises auf die Patenterteilung: **06.04.2016**
(21) Anmeldenummer: 13719019.5
(22) Anmeldetag: 19.04.2013
(51) Int. Cl.: B29C 70/46, B29C 70/54, B29C 45/14

(54) **VERFAHREN ZUM WENIGSTENS BEREICHSWEISEN KONSOLIDIEREN EINES VORFORMLINGS ZUR HERSTELLUNG EINES FORMTEILS IN EINEM FORMWERKZEUG**
METHOD FOR CONSOLIDATING A PERFORM AT LEAST IN SOME REGIONS IN ORDER TO PRODUCE A MOLDED PART IN A MOLD
PROCÉDÉ DE CONSOLIDATION AU MOINS PAR ENDROITS D'UNE PRÉFORME SERVANT À FABRIQUER UNE PIÈCE FAÇONNÉE DANS UN OUTIL DE FAÇONNAGE

(30) Priorität: 09.05.2012 DE 102012104044
(43) Veröffentlichungstag der Anmeldung: 18.03.2015
(73) Patentinhaber: REHAU AG + Co, 95111 Rehau (DE)
(72) Erfinder: KIND, Franz-Georg, 95176 Konradsreuth (DE); LÖFFLER, Andreas, 95111 Rehau (DE)
(86) Internationale Anmeldenummer: PCT/EP2013/001175
(87) Internationale Veröffentlichungsnummer: WO 2013/167234

(56) Entgegenhaltungen:
- DE-A1- 4 120 133
- DE-A1-102004 054 228
- DE-A1-102005 060 147

## Beschreibung

Die vorliegende Erfindung betrifft ein Verfahren zum wenigstens bereichsweisen Konsolidieren eines Vorformlings zur Herstellung eines Formteils in einem Formwerkzeug.

Es ist bekannt aus einem Vorformling, der eine Mehrzahl von flächig ausgebildeten bzw. im wesentlichen flächig ausgebildeten, faserverstärkten Matten umfasst bzw. aus diesen Matten gebildet ist, ein faserverstärktes Formteil bzw. Bauteil herzustellen, und zwar durch Konsolidieren und/oder plastisches Formen bzw. Verformen des Vorformlings in einem Formwerkzeug zum Bilden der endgültigen Kontur des Formteils bzw. Bauteils. Der Vorformling selbst wird meist dadurch ausgebildet, dass die Matten auf einem Werkstückträger durch Ablegen und fortlaufendes Aufbauen der Matten zu dem Vorformling aufgebaut werden. Die plastische Verformbarkeit wird dadurch bereitgestellt, dass die thermoplastische Matrix, in welche die Fasern eingebettet sind, bis an oder über die Schmelztemperatur derselben erwärmt wird.

DE 10 2005 060 147 A1 offenbart die Merkmale des Oberbegriffs des Anspruchs 1.

Vor dem Verformen bzw. während des Verformens oder auch nach dem Verformen in dem Formwerkzeug wird der Vorformling in der Regel auch konsolidiert. Unter Konsolidieren ist erfindungsgemäß ein Verdichten bzw. Kompaktieren der faserverstärkten Matten des Vorformlings zu verstehen. Beim dem Konsolidieren kann vorteilhaft durch das Verdichten bzw. Kompaktieren insbesondere in den Matten aufgenommene Luft aus den Matten entweichen. Besonders vorteilhaft kann durch das Konsolidieren bzw. Zusammenpressen auch zwischen den einzelnen Matten des Vorformlings befindliche Luft entweichen. Insbesondere bei dem Konsolidieren wird auch die in dem Vorformling gespeicherte Wärmeenergie an das Formwerkzeug abgeführt bzw. auf dieses übertragen, wodurch der zu dem Bauteil bzw. Formteil geformte Vorformling auskühlt und erstarrt.

Zum Formen des Formteils bzw. Bauteils aus dem Vorformling durch Beaufschlagen mit Anpressdruck und insbesondere auch zum Konsolidieren sind aufwendige Formwerkzeug-Konstruktionen erforderlich, welche durch Vorsehen von verlagerbaren Formwerkzeugabschnitten, wie z.B. Schiebern, ein Konsolidieren bzw. Verformen an Formflächen durch Beaufschlagen mit einem Anpressdruck ermöglichen. Um ein wirksames Konsolidieren des Vorformlings zu erzielen, werden vorzugsweise sämtliche Bereiche des Vorformlings konsolidiert. Dies gilt auch für Bereiche des Vorformlings, die infolge der herzustellenden Bauteil-Geometrie bzw. Formteil-Geometrie im Formwerkzug gekrümmt bzw. stark gekrümmt sind. Diese gekrümmten Bereiche sind in der Regel nur unter hohem technischen Aufwand, insbesondere durch Vorsehen von sehr aufwendigen Formwerkzeug-Konstruktionen konsolidierbar, welche eine Erreichbarkeit der gekrümmten Bereiche durch verlagerbare bzw. bewegbare Formwerkzeugabschnitte des Formwerkzeugs ermöglichen, die dafür vorgesehen sind, die gekrümmten Bereiche durch Anpressen an Formflächen zu konsolidieren.

### Zugrundeliegende Aufgabe

Es ist Aufgabe der Erfindung, ein Verfahren zum wenigstens bereichsweisen Konsolidieren eines Vorformlings zur Herstellung eines Formteils in einem Formwerkzeug anzugeben, mit welchem der zum Konsolidieren erforderliche technische Aufwand wesentlich reduziert werden kann.

### Erfindungsgemäße Lösung

Diese Aufgabe wird erfindungsgemäß mit einem Verfahren mit den Merkmalen des Anspruchs 1 gelöst.

Das erfindungsgemäße Verfahren zum wenigstens bereichsweisen Konsolidieren des Vorformlings in einem Formwerkzeugs umfasst die folgenden Schritte:
(A) Flächiges Anlegen des Vorformlings an wenigstens eine Formfläche des Formwerkzeugs, und
(B) wenigstens bereichsweises Konsolidieren des Vorformlings durch Anpressen wenigstens eines angelegten Bereichs des Vorformlings an die Formfläche, wobei der angelegte Bereich durch Beaufschlagen des Bereichs mit einem Anpressdruck an die Formfläche gepresst wird, welcher durch Anspritzen von spritzbarem Kunststoffmaterial an den Bereich gebildet wird.

Unter Konsolidieren ist erfindungsgemäß ein Verdichten bzw. Kompaktieren des Vorformlings bzw. der faserverstärkten Matten des Vorformlings zu verstehen. Bei dem Konsolidieren kann vorteilhaft durch das Verdichten bzw. Kompaktieren insbesondere in den Matten aufgenommene Luft aus den Matten entweichen. Besonders vorteilhaft kann durch das Konsolidieren bzw. Zusammenpressen auch zwischen den einzelnen Matten des Vorformlings befindliche Luft entweichen.

Im Unterschied zu den bekannten Lösungen, bei denen ein Konsolidieren durch Anpressen mittels eines oder mehrerer verlagerbarer Formwerkzeugabschnitte oder eines oder mehrerer beweglicher Formwerkzeug-Elemente(wie z.B. Schiebern oder einem Stempel), an eine oder mehrere Formflächen erfolgt, kann gemäß Schritt B des erfindungsgemäßen Verfahrens vorteilhaft auf ein aufwendiges Bereitstellen von verlagerbaren Formwerkzeugabschnitten bzw. beweglichen Formwerkzeug-Elementen verzichtet werden, einhergehend mit einer wesentlichen Reduzierung des zum Konsolidieren erforderlichen technischen Aufwands.

Erfindungsgemäß ist in Schritt B vorgesehen durch Anpressen wenigstens eines angelegten Bereichs des Vorformlings an die Formfläche bzw. die wenigstens eine Formfläche den Vorformling wenigstens bereichsweise zu konsolidieren. Zum Konsolidieren wird der angelegte Bereich durch Beaufschlagen des Bereichs mit einem Anpressdruck an die Formfläche gepresst wird, welcher durch Anspritzen von spritzbarem Kunststoffmaterial bzw. plastifiziertem Kunststoffmaterial an den Bereich bzw. den angelegten Bereich gebildet wird. Im Unterschied zu den bekannten Lösungen wird also nicht durch technisch aufwendiges Vorsehen eines oder mehrerer verlagerbarer Formwerkzeugabschnitte bzw. eines oder mehrerer beweglicher Formwerkzeug-Elemente im Formwerkzeug ein Konsolidieren ermöglicht, sondern durch das Beaufschlagen des angelegten Bereichs mit einem Anpressdruck, welcher durch Anspritzen von spritzbarem Kunststoffmaterial an diesen Bereich gebildet wird. Die Bereitstellung bzw. Bildung dieses Anpressdrucks ist ohne großen technischen Aufwand realisierbar, z.B. durch Vorsehen eines oder mehrerer Spritzkanäle in bzw. an dem Formwerkzeug innerhalb derer das spritzbare bzw. plastifizierte Kunststoffmaterial zu dem Vorformling gelangt.

Insbesondere kann in Schritt B der Vorformling durch Anpressen des gesamten Vorformlings bzw. durch Anpressen einer gesamten Vorformling-Seite an die Formfläche zur Gänze bzw. vollständig konsolidiert werden.

Das spritzbare Kunststoffmaterial bzw. plastifizierten Kunststoffmaterial ist vorzugsweise ein thermoplastisches Kunststoffmaterial.

Die wenigstens eine Formfläche bzw. die mehreren Formflächen des Formwerkzeugs, an welche der Vorformling in Schritt A angelegt wird, kann bzw. ist neben dem Konsolidieren gemäß Schritt B insbesondere auch zum plastischen Verformen bzw. plastischen Formen des Vorformlings vorgesehen, um durch Anpressen an die Formfläche aus diesem das Formteil bzw. Bauteil zu bilden durch plastisches Verformen und/oder Konsolidieren. Zum plastischen Verformen ist hierbei die thermoplastische Matrix jeder Matte (bzw. das thermoplastische Kunststoffmaterial jeder Matte, in welches die Fasern der Matte wenigstens teilweise oder zur Gänze eingebettet sind) durch wenigstens bereichsweises oder vollständiges Erwärmen der thermoplastischen Matrix bis an oder über die Schmelztemperatur der thermoplastischen Matrix wenigstens teilweise oder zur Gänze in den plastischen Zustand zu überführen, der auch zum Konsolidieren des Vorformlings erforderlich bzw. vorteilhaft sein kann.

Der Vorformling zur Herstellung eines Formteils - also ein Vorformling, der für die Herstellung des Formteils bzw. Bauteils vorgesehen ist - umfasst eine Mehrzahl von flächig ausgebildeten bzw. im wesentlichen flächig ausgebildeten faserverstärkten Matten, wobei die Matten des Vorformlings aufeinandergelegt und/oder aneinander angelegt und/oder nebeneinandergelegt sein können. Vorzugsweise kann es sich bei den flächig ausgebildeten, faserverstärkten Matten um zugeschnittene Matten bzw. Materialstücke mit einer die Fasern zumindest teilweise umgebenden thermoplastischen Matrix handeln.

Die Faserverstärkung der Matten wird vorzugsweise durch Mineralfasern, insbesondere Glasfasern, und/oder Carbonfasern, und/oder Aramidfasern und/oder polymeren Fasern, und/oder synthetischen Fasern und/oder Basaltfasern und/oder aus Fasern von nachwachsenden Rohstoffen gebildet. Bei den Fasern kann es sich insbesondere um Endlosfasern handeln, also um fasern, die die jeweilige Matte in einer Richtung im Wesentlichen vollständig durchziehen.

Zur Stabilisierung des Vorformlings sind wenigstens zwei vorzugsweise alle Matten des Vorformlings zueinander lagefixiert bzw. zur Stabilisierung miteinander verbunden. Die Verbindung der Matten kann hierbei in Form einer z.B. durch verschweißen hergestellten stoffschlüssigen Verbindung ausgebildet sein. Die Lagefixierung der Matten bietet neben der Stabilisierung auch den Vorteil, dass der Vorformling eine deutlich verbesserte Handhabbarkeit aufweist. Zur Lagefixierung der Matten zueinander können zudem textiltechnische Verfahren, vorzugsweise Vernadeln und/oder Vernähen eingesetzt werden.

Bei dem erfindungsgemäßen Verfahren wird nach Schritt A und vor während oder nach Schritt B der übrige Bereich des Vorformlings bzw. der übrige angelegte Bereich des Vorformlings durch wenigstens einen verlagerbaren Formwerkzeugabschnitt zum Konsolidieren flächig an die wenigstens eine Formfläche bzw. die Formfläche gepresst.

Hierbei wird wenigstens ein angelegter Bereich konsolidiert durch das in Schritt B vorgesehene Anspritzen mit dem spritzbaren bzw. plastifizierten Kunststoffmaterial während der übrige Bereich bzw. der übrige angelegte Bereich des Vorformlings durch wenigstens einen verlagerbaren Formwerkzeugabschnitt zum Konsolidieren flächig an die wenigstens eine Formfläche gepresst wird. Hierdurch wird ein auf einfache und praktische Weise durchführbares Konsolidieren des Vorformlings in dem Formwerkzeug insbesondere ermöglicht, wenn die aus dem Vorformling herzustellende Form des Formteils bzw. Bauteils im wesentlichen ebene Flächen bzw. ebene Flächenbereiche aufweist, die über vergleichsweise kleine und gekrümmte bzw. stark gekrümmte Flächen bzw. Flächenbereiche miteinander verbunden sind. Die Bereiche bzw. Abschnitte mit den ebenen Flächen bzw. Flächenbereichen sind hierbei durch die verlagerbaren Formwerkzeugabschnitte formbar bzw. konsolidierbar während für die Bereiche bzw. Abschnitte mit den gekrümmten Flächen bzw. gekrümmten Flächenbereichen auf das Anspritzen gemäß Schritt B zurückgegriffen werden kann.

Hierdurch ist ein auf einfache und praktische Weise durchführbares Konsolidieren des Vorformlings in dem Formwerkzeug möglich, wenn die Formfläche eine Teilfläche und wenigstens zwei ebene Flächenbereiche bzw. wenigstens zwei im wesentlichen ebene Flächenbereiche umfasst, wobei die ebenen bzw. im wesentlichen ebenen Flächenbereiche winkelig zueinander angeordnet sind und jeder der ebenen Flächenbereiche an die Teilfläche angrenzt, und wobei in Schritt B der angelegte Bereich an die Teilfläche und der übrige Bereich des Vorformlings bzw. der übrige angelegte Bereich des Vorformlings an die ebenen Flächenbereiche gepresst wird.

So kann einerseits zum Formen bzw. Konsolidieren der Bereiche des Vorformlings bzw. des Formteils mit den ebenen bzw. im wesentlichen ebenen Flächen bzw. Flächenbereichen auf entsprechend ausgebildete Formflächen-Bereiche - also die ebenen Flächenbereiche der Formfläche - zurückgegriffen werden, die auf einfache und praktische Weise von wenigstens einem verlagerbaren Formwerkzeugabschnitt, wie z.B. einem Schieber, erreichbar sind und an welche der Vorformling durch den Formwerkzeugabschnitt zum Konsolidieren gepresst werden kann.

Andererseits kann z.B. zum Konsolidieren von gekrümmten Bereichen des Vorformlings bzw. Formteils bzw. zum Konsolidieren von Bereichen, an denen ebene Flächenbereiche angrenzen und welche von einem verlagerbaren Formwerkzeugabschnitt nicht erreichbar sind (oder nur unter hohem technischen und kostenintensiven Aufwand von einem verlagerbaren Formwerkzeugabschnitt erreichbar sind) - und/oder welche nicht einfach erwärmbar bzw. erhitzbar sind bzw. welche noch zusätzliche Wärme zum Konsolidieren benötigen - vorteilhaft auf das erfindungsgemäß vorgesehene Konsolidieren durch Anspritzen mit dem spritzbaren Kunststoffmaterial zurückgegriffen werden. Durch das Anspritzen ist ein wirksames Konsolidieren dieser Bereiche und auch ein wirksames Erwärmen bzw. Erhitzen dieser Bereiche durch Übertragung von Wärmeenergie des erhitzen bzw. erwärmten spritzbaren bzw. plastifizierten Kunststoffmaterials möglich, wobei durch die Erwärmung die Konsolidierung vorteilhaft unterstützt werden kann.

Durch die vorgesehene erfindungsgemäße Kombination unterschiedlicher Arten des Konsolidierens kann vorteilhaft ein an die jeweilige Form des herzustellenden Formteils bzw. Bauteils angepasste Konsolidierung auf einfache und praktische Weise vorgenommen werden, wobei von verlagerbaren Formwerkzeugabschnitten ohne großen technischen Aufwand erreichbare Bereiche durch diese konsolidiert werden und von verlagerbaren Formwerkzeugabschnitten nicht oder nur sehr schwer erreichbare Bereiche durch Anspritzen mit dem spritzbaren Kunststoffmaterial konsolidiert werden. Vorteilhaft kann daher auch das jeweilige Formwerkzeug vergleichsweise einfach aufgebaut sein und daher auch einfach zu konstruieren sein, was wiederum auch die Herstellung komplexer Bauteile bzw. Formteile ermöglicht, da im Vergleich zu den bekannten Lösungen von ansonsten erforderlichen aufwendigen verlagerbaren Formwerkzeugabschnitten abgesehen werden und mithin zusätzlicher Bauraum im Formwerkzeug geschaffen werden kann.

Bei einer weiteren Ausführungsform des Verfahrens weist der Vorformling zwei voneinander abgewandte Vorformling-Seiten auf bzw. es wird ein Vorformling mit zwei voneinander abgewandten Vorformling-Seiten verwendet, wobei in Schritt A eine erste der beiden Vorformling-Seiten an wenigstens eine erste Formfläche angelegt wird und wenigstens ein Bereich des Vorformlings unter Ausbildung eines flächigen Kontakts der zweiten der beiden Vorformling-Seiten zu wenigstens einer zweiten Formfläche an diese angelegt wird, wobei die zweite Formfläche von der ersten Formfläche beabstandet ist, wobei in Schritt B der angelegte Bereich an die zweite Formfläche gepresst wird durch Beaufschlagen des Bereichs mit dem Anpressdruck, der durch Anspritzen von spritzbarem Kunststoffmaterial an den Bereich gebildet wird, und wobei nach Schritt A und vor während oder nach Schritt B die erste Vorformling-Seite bzw. der angelegte Bereich der ersten Vorformling-Seite durch wenigstens einen verlagerbaren Formwerkzeugabschnitt zum konsolidieren flächig an die wenigstens eine erste Formfläche gepresst wird.

Auch wie bei dem erfindungsgemäßen Verfahren kann auch bei Vorsehen dieser weiteren Aüsführungsform durch die vorgesehene Kombination der unterschiedlichen Arten des Konsolidierens vorteilhaft ein an die jeweilige Form des Formteils bzw. Bauteils angepasste Konsolidierung auf einfache und praktische Weise vorgenommen werden, bei der von verlagerbaren Formwerkzeugabschnitten ohne großen technischen Aufwand erreichbare Bereiche des Vorformlings bzw. Formteils durch diese konsolidiert werden und bei der von verlagerbaren Formwerkzeugabschnitten nicht oder nur sehr schwer erreichbare Bereiche durch Anspritzen mit dem spritzbaren Kunststoffmaterial konsolidiert werden.

Bei einer praktischen Ausführungsform des erfindungsgemäßen Verfahrens wird in Schritt B ein sich von der thermoplastischen Matrix unterscheidendes spritzbares Kunststoffmaterial verwendet, welches nach dem Anspritzen an den angelegten Bereich von diesem wieder durch Abziehen lösbar ist. Das spritzbare bzw. plastifizierte Kunststoffmaterial, welches durch Erwärmen in den spritzbaren bzw. plastifizierten Zustand überführbar ist, ist hierbei ein Kunststoffmaterial aus einer Kunststoffmaterialgruppe, die eine zu der Kunststoffmaterialgruppe der thermoplastischen Matrix unverträgliche Kunststoffmaterialgruppe ist. Dies hat zur Folge, dass das spritzbare Kunststoffmaterial nach dem Anspritzen vorteilhaft von dem angelegten Bereich wieder abziehbar bzw. manuell abziehbar ist. Beispiele für unverträgliche Kunststoffmaterialgruppen können Kunststoffmaterialgruppen mit deutlich unterschiedlichen Schmelztemperaturen sein. Die Unverträglichkeit der Kunststoffmaterialgruppen kann auch durch Zusatz von Additiven erreicht werden. Als unverträgliche Kunststoffmaterialgruppen haben sich insbesondere folgende Paarungen erwiesen: Polypropylen (PP) mit Acrylnitril-Butadien-Styrol (ABS), Polypropylen (PP) mit Polycarbonat (PC), Polypropylen (PP) mit Polyethylen hoher Dichte (PE-HD), Polypropylen (PP) mit Polystyrol (PS), Polypropylen (PP) mit Thermoplastischen Elastomeren auf Urethanbasis (TPU), Polypropylen (PP) mit Styrol-Acrylnitril (SAN), Polypropylen (PP) mit Polyamid (PA). Polypropylen (PP) wird vorzugsweise für die Kunststoffmaterialgruppe der thermoplastischen Matrix gewählt.

Bei dieser praktischen Ausführungsform dient das spritzbare bzw. plastifizierte Kunststoffmaterial vorteilhaft lediglich dem Anpressen bzw. Erwärmen wenigstens des angelegten Bereichs in Schritt B mit dem Ziel des wirksamen Konsolidierens. Ein aufwendiges Vorsehen eines verlagerbaren Formwerkzeugabschnitts bzw. eines bewegbaren Werkzeug-Elements oder eines bewegbaren Stempels ist bei dieser Art des Konsolidierens nicht erforderlich und das angespritzte Kunststoffmaterial kann vorteilhaft nach dem Konsolidieren einfach abgezogen werden, insbesondere kann es auch ohne ein weiteres Werkzeug abgezogen werden. Das angespritzte Kunststoffmaterial kann dann vorteilhaft sofort wieder zerkleinert und/oder dem erfindungsgemäßen Verfahren zugeführt werden. Vorteilhaft durchläuft das anspritzbare Kunststoffmaterial daher einen Kreislauf innerhalb des erfindungsgemäßen Verfahrens.

Bei einer weiteren praktischen Ausführungsform des erfindungsgemäßen Verfahrens sind die Matten des Vorformlings glasfaserverstärkte Matten bzw. es werden glasfaserverstärkte Matten verwendet, wobei das spritzbare Kunststoffmaterial ein glasfaserverstärktes Kunststoffmaterial ist, welches durch das Anspritzen mit der thermoplastischen Matrix stoffschlüssig verbindbar ist, und wobei der Füllgrad der Glasfasern bei dem spritzbaren Kunststoffmaterial sich um höchstens 40% vom dem Füllgrad der Glasfasern bei den Matten unterscheidet oder vorzugsweise mit diesem Füllgrad übereinstimmt.

Bei dieser weiteren praktischen Ausführungsform dient das spritzbare Kunststoffmaterial vorteilhaft nicht nur dem Anpressen wenigstens des angelegten Bereichs in Schritt B mit dem Ziel des wirksamen Konsolidierens sondern kann zusätzlich auch für die Formgebung des aus dem Vorformling herzustellenden Formteils bzw. Bauteils durch das Anspritzen in Schritt B vorgesehen sein. Durch Vorsehen des Füllgrads der Glasfasern bei dem spritzbaren Kunststoffmaterial, der sich um höchstens 40% vom dem Füllgrad der Glasfasern bei den Matten unterscheidet oder vorzugsweise mit diesem Füllgrad übereinstimmt, wird hierbei vorteilhaft ein an die mechanischen Eigenschaften bzw. die Festigkeit des glasfaserverstärkten Mattenmaterials angepasster angespritzter Bereich gebildet. Insbesondere wird dadurch sehr wirksam ein unerwünschter bzw. nachteiliger Verzug des Bauteils bzw. Formteils vermieden.

### Kurzbeschreibung der Zeichnungen

Nachfolgend werden Ausführungsbeispiele der Erfindung anhand der beigefügten Zeichnungen näher erläutert. Es zeigt:
- Fig. 1: eine sehr schematische Schnittdarstellung eines ersten Formwerkzeugs zusammen mit einem Vorformling zur Veranschaulichung eines erstens Ausführungsbeispiels des erfindungsgemäßen Verfahrens, und
- Fig. 2: eine sehr schematische Schnittdarstellung eines zweiten Formwerkzeugs zusammen mit einem Vorformling zur Veranschaulichung eines zweiten Ausführungsbeispiels des erfindungsgemäßen Verfahrens.

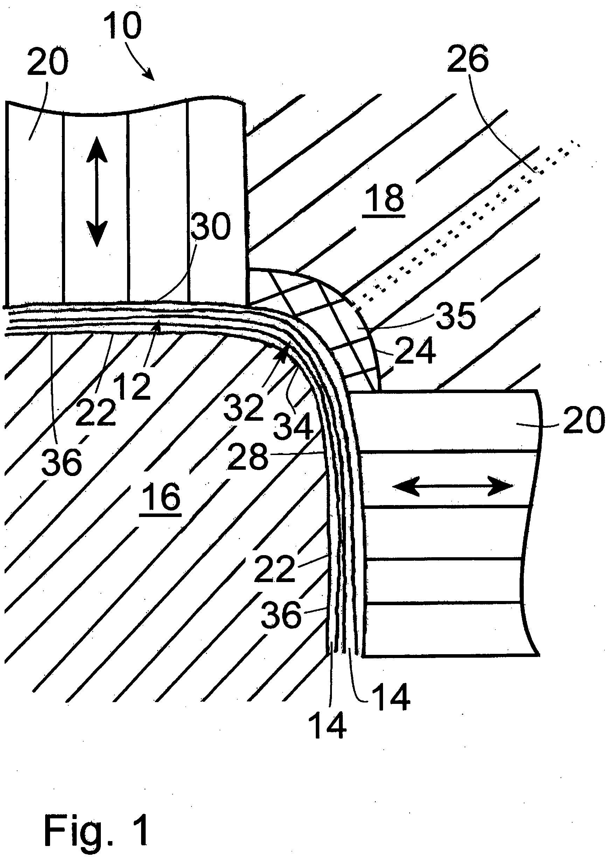

Das in Fig. 1 sehr schematisch dargestellte Formwerkzeug 10 ist für die Herstellung bzw. Bildung eines Formteils durch plastisches Verformen und Konsolidieren eines Vorformlings 12 zu Herstellung des Formteils vorgesehen, also eines Vorformlings 12, der für die Herstellung dieses Formteils durch plastisches Verformen und Konsolidieren des Vorformlings 12 vorgesehen ist. Das aus dem Vorformling 12 herstellbare Formteil ist hierbei vorliegend in Form eines Eckprofils ausgebildet. Der Vorformling 12 weist eine Mehrzahl von flächig ausgebildeten und übereinander liegenden faserverstärkten Matten 14 mit einer die Fasern (hier nicht dargestellt) zumindest teilweise umgebenden thermoplastischen Matrix auf.

Das Formwerkzeug 10 weist einen ersten und einen zweiten ortsfesten Formwerkzeugabschnitt 16, 18 und zwei bewegbare bzw. verlagerbare Formwerkzeugabschnitte 20 auf (die Bewegbarkeit bzw. Verlagerbarkeit ist jeweils durch einen Doppelpfeil schematisch veranschaulicht). Der erste ortsfeste Formwerkzeugabschnitt 16 weist eine erste Formfläche 22 auf und der zweite ortsfeste Formwerkzeugabschnitt 18 weist eine Vertiefung 24 bzw. Aussparung 24 zur Aufnahme eines spritzbaren bzw. plastifizierten Kunststoffmaterials auf, welches der Vertiefung 24 bzw. der Aussparung 24 über einen an dem zweiten ortsfesten Formwerkzeugabschnitt 18 vorgesehenen Spritzkanal 26 von außerhalb des Formwerkzeugs 10 zuführbar bzw. in die Vertiefung bzw. Aussparung 24 einbringbar ist.

Die Fig.1 veranschaulicht die Situation während des Konsolidieren gemäß Schritt B des erfindungsgemäßen Verfahren und damit die Situation nach dem flächigen Anlegen des Vorformlings 12 - bzw. nach dem flächigen einer ersten Vorformling-Seiten 28 von zwei voneinander abgewandten Vorformling-Seiten 28, 30 des Vorformlings 12 - an die erste Formfläche 22 des ersten ortsfesten Formwerkzeugabschnitts 16. Der Schritt B umfasst bei dem hier veranschaulichten ersten Ausführungsbeispiel zum einem ein bereichsweises Konsolidieren des Vorformlings 12 durch Anpressen eines angelegten Bereichs 32 des Vorformlings an eine Teilfläche 34 der ersten Formfläche 22. Der angelegte Bereich 32 wird hier durch Beaufschlagen des Bereichs 32 mit einem Anpressdruck an die erste Formfläche 22 bzw. an die Teilfläche 34 gepresst, welcher durch Anspritzen von spritzbarem Kunststoffmaterial 35 bzw. plastifiziertem Kunststoffmaterial 35, welches insbesondere ein thermoplastisches Kunststoffmaterial 35 sein kann, an den Bereich 32 gebildet wird. Zum Bilden bzw. Aufbauen des Anpressdrucks wird das plastifizierte Kunststoffmaterial über den Spritzkanal 26 in die Aussparung 24 eingebracht bzw. dieser zugeführt, welche der zweiten Vorformling-Seite 30 zugewandt ist. Während dieses Schritts B wird auch der übrige Bereich des Vorformlings 12 durch die beiden bzw. von den beiden verlagerbaren Formwerkzeugabschnitte 20 zum konsolidieren flächig an die erste Formfläche 22 gepresst.

Die erste Formfläche 22 umfasst die Teilfläche 34, welche in Form einer gebogenen bzw. gekrümmten Fläche ausgebildet ist, und zwei im wesentlichen ebene Flächenbereiche 36, wobei die im wesentlichen ebenen Flächenbereiche 36 rechtwinkelig bzw. winkelig zueinander angeordnet sind und jeder der Flächenbereiche 36 an die Teilfläche 34 angrenzt. Die Flächenbereiche 36 können zum Konsolidieren des Vorformlings 12 an diesen Flächenbereichen 36 von den verlagerbaren Formwerkzeugabschnitten 20 erreicht werden während die gebogene bzw. gekrümmte Teilfläche 34 von keinem der verlagerbaren Formwerkzeugabschnitte 20 erreichbar ist.

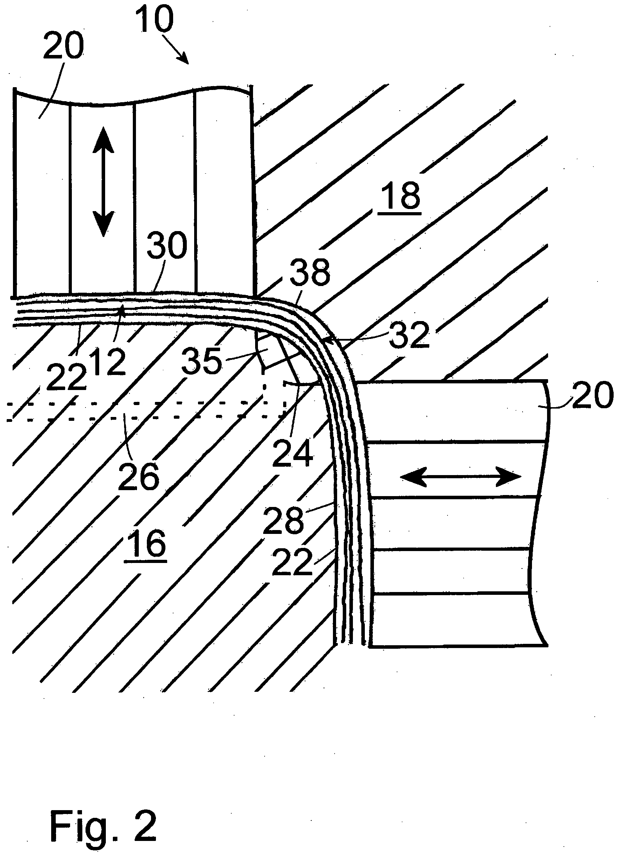

Die Fig. 2 dient der Veranschaulichung eines zweiten Ausführungsbeispiels des erfindungsgemäßen Verfahrens, wobei sich das in der Fig. 2 dargestellte Formwerkzeug 10 von dem der Fig. 1 dadurch unterscheidet, dass die Aussparung 24 an dem ersten ortsfesten Formwerkzeugabschnitt 16 vorgesehen ist, dass an dem zweiten ortsfesten Formwerkzeugabschnitt 18 eine zweite Formfläche 38 vorgesehen ist, und dass hier ein Spritzkanal 26 an dem ersten ortsfesten Formwerkzeugabschnitt 16 vorgesehen ist.

Gemäß dem zweiten Ausführungsbeispiel des erfindungsgemäßen Verfahrens wird in Schritt A die erste Vorformling-Seite 28 der beiden voneinander abgewandten Vorformling-Seiten 28, 30 an die erste Formfläche 22 angelegt, die an dem ersten ortsfesten Formwerkzeugabschnitt 16 vorgesehen ist, und ein Bereich 32 des Vorformlings 12 wird unter Ausbildung eines flächigen Kontakts der zweiten Vorformling-Seite 30 zu der zweiten Formfläche 38 an diese angelegt. Die zweite Formfläche 38 ist von der ersten Formfläche 22 beabstandet.

Die Fig. 2 veranschaulicht den Schritt B dieses zweiten Ausführungsbeispiels des erfindungsgemäßen Verfahrens, beim dem der angelegte Bereich 32 des Vorformlings 12 an die zweite Formfläche 38 gepresst wird durch Beaufschlagen des Bereichs 32 mit dem Anpressdruck, der durch Anspritzen von spritzbarem Kunststoffmaterial 35 bzw. plastifiziertem Kunststoffmaterial 35 an den Bereich 32 gebildet wird. Auch hier wird zum Bilden bzw. Aufbauen des Anpressdrucks das plastifizierte Kunststoffmaterial 35 über einen Spritzkanal 26 in die Aussparung 24 eingebracht bzw. dieser zugeführt, wobei die Aussparung 24 der ersten Vorformling-Seite 28 zugewandt ist. Während dieses Schritts B wird auch die erste Vorformling-Seite 28 bzw. der angelegte Bereich der ersten Vorformling-Seite 28 durch die beiden bzw. von den beiden verlagerbaren Formwerkzeugabschnitten 20 zum konsolidieren flächig an die erste Formfläche 22 gepresst.

### Bezugszeichenliste

- 10: Formwerkzeug
- 12: Vorformling
- 14: Matte
- 16: erster ortsfester Formwerkzeugabschnitt
- 18: zweiter ortsfester Formwerkzeugabschnitt
- 20: verlagerbarer Formwerkzeugabschnitt
- 22: erste Formfläche
- 24: Aussparung
- 26: Spritzkanal
- 28: erste Vorformling-Seite
- 30: zweite Vorformling-Seite
- 32: angelegter Bereich
- 34: Teilfläche
- 35: Kunststoffmaterial
- 36: ebener Flächenbereich
- 38: zweite Formfläche

## Patentansprüche

1. Verfahren zum wenigstens bereichsweisen Konsolidieren eines Vorformlings (12) zur Herstellung eines Formteils in einem Formwerkzeug (10), wobei der Vorformling (12) eine Mehrzahl von flächig ausgebildeten faserverstärkten Matten (14) mit einer die Fasern zumindest teilweise umgebenden thermoplastischen Matrix umfasst, wobei das Formwerkzeug (10) wenigstens eine Formfläche (22, 38) aufweist, und wobei das Verfahren die folgenden Schritte umfasst:
(A) Flächiges Anlegen des Vorformlings (12) an wenigstens eine Formfläche (22, 38) des Formwerkzeugs (10), und
(B) wenigstens bereichsweises Konsolidieren des Vorformlings (12) durch Anpressen wenigstens eines angelegten Bereichs (32) des Vorformlings (12) an die Formfläche (22, 38), wobei der angelegte Bereich (32) durch Beaufschlagen des Bereichs (32) mit einem Anpressdruck an die Formfläche (22, 38) gepresst wird, welcher durch Anspritzen von spritzbarem Kunststoffmaterial (35) an den Bereich (32) gebildet wird
**dadurch gekennzeichnet, dass**
die Formfläche (22) eine Teilfläche (34) und wenigstens zwei ebene Flächenbereiche (36) umfasst, wobei die ebenen Flächenbereiche (36) winkelig zueinander angeordnet sind und jeder der ebenen Flächenbereiche (36) an die Teilfläche (34) angrenzt, und wobei in Schritt (B) der angelegte Bereich an die Teilfläche (34) und der übrige Bereich des Vorformlings (12) an die ebenen Flächenbereiche (36) gepresst wird,
wobei nach Schritt (A) und vor während oder nach Schritt (B) der übrige Bereich des Vorformlings (12) durch wenigstens einen verlagerbaren Formwerkzeugabschnitt (20) zum Konsolidieren flächig an die wenigstens eine Formfläche (22) gepresst wird.

2. Verfahren nach einem der vorangehenden Ansprüche, **dadurch gekennzeichnet, dass** in Schritt (B) ein sich von der thermoplastischen Matrix unterscheidendes spritzbares Kunststoffmaterial (35) verwendet wird, welches nach dem Anspritzen an den angelegten Bereich (32) von diesem wieder durch Abziehen lösbar ist.

3. Verfahren nach einem der vorangehenden Ansprüche, **dadurch gekennzeichnet, dass** die Matten (14) des Vorformlings (12) glasfaserverstärkte Matten sind, dass das spritzbare Kunststoffmaterial (35) ein glasfaserverstärktes Kunststoffmaterial ist, welches durch das Anspritzen mit der thermoplastischen Matrix stoffschlüssig verbindbar ist, und dass der Füllgrad der Glasfasern bei dem spritzbaren Kunststoffmaterial (35) sich um höchstens 40% vom dem Füllgrad der Glasfasern bei den Matten (14) unterscheidet.

## Claims

1. Method for consolidating a preform (12) at least in some regions to produce a moulded part in a mould (10), the preform (12) comprising a plurality of flat fibre-reinforced mats (14) with a thermoplastic matrix at least partly surrounding the fibres, the mould (10) having at least one moulding surface (22, 38) and the method comprising the following steps:
(A) placing the preform (12) flat against at least one moulding surface (22, 38) of the mould (10), and
(B) consolidating the preform (12) at least in some regions by pressing at least one placed region (32) of the preform (12) against the moulding surface (22, 38), the placed region (32) being pressed against the moulding surface (22, 38) by subjecting the region (32) to a contact pressure, which is produced by injecting injectable plastics material (35) onto the region (32),
**characterized in that**
the moulding surface (22) comprises a subsurface (34) and at least two planar surface regions (36), the planar surface regions (36) being arranged at an angle to one another and each of the planar surface regions (36) adjoining the subsurface (34), and in step (B) the placed region being pressed against the subsurface (34) and the remaining region of the preform (12) being pressed against the planar surface regions (36), wherein, after step (A) and before, during or after step (B), the remaining region of the preform (12) is pressed against the at least one moulding surface (22) by at least one displaceable mould portion (20) for consolidation.

2. Method according to one of the preceding claims, **characterized in that**, in step (B), an injectable plastics material (35) different from the thermoplastic matrix is used, and after being injected onto the placed region (32) this material can be detached again from it by being pulled off.

3. Method according to one of the preceding claims, **characterized in that** the mats (14) of the preform (12) are glass-fibre reinforced mats, **in that** the injectable plastics material (35) is a glass-fibre reinforced plastics material, which by being injected on can be integrally bonded with the thermoplastic matrix, and **in that** the degree of filling of the glass fibres in the injectable plastics material (35) differs from the degree of filling of the glass fibres in the mats (14) by at most 40%.

## Revendications

1. Procédé pour consolider au moins en partie une préforme (12) pour la fabrication d'une pièce façonnée dans un outil de façonnage (10), la préforme (12) comprenant une pluralité de mats plats renforcés par des fibres (14) avec une matrice thermoplastique entourant au moins en partie les fibres, l'outil de façonnage (10) présentant au moins une surface de façonnage (22, 38), et le procédé comprenant les étapes suivantes :
(A) application à plat de la préforme (12) contre au moins une surface de façonnage (22, 38) de l'outil de façonnage (10), et
(B) consolidation au moins en partie de la préforme (12) par pressage d'au moins une région appliquée (32) de la préforme (12) contre la surface de façonnage (22, 38), la région appliquée (32) étant pressée par sollicitation de la région (32) avec une pression d'application contre la surface de façonnage (22, 38), qui est formée par moulage par injection de matériau en plastique injectable (35) sur la région (32),
**caractérisé en ce que**
la surface de façonnage (22) comprend une surface partielle (34) et au moins deux régions de surface planes (36), les régions de surface planes (36) étant disposées de manière angulaire l'une par rapport à l'autre et chacune des régions de surface planes (36) étant adjacente à la surface partielle (34), et, dans l'étape (B), la région appliquée étant pressée contre la surface partielle (34) et le reste de la région de la préforme (12) étant pressé contre les régions de surface planes (36), le reste de la région de la préforme (12), après l'étape (A) et avant ou après l'étape (B), étant pressé en vue de la consolidation par au moins une portion d'outil de façonnage déplaçable (20) à plat contre l'au moins une surface de façonnage (22).

2. Procédé selon la revendication précédente, **caractérisé en ce qu'**à l'étape (B) un matériau en plastique (35) injectable différent de la matrice thermoplastique est utilisé, lequel, après le moulage par injection sur la région appliquée (32), peut à nouveau être détaché de celle-ci par pelage.

3. Procédé selon l'une quelconque des revendications précédentes, **caractérisé en ce que** les mats (14) de la préforme (12) sont des mats renforcés par des fibres de verre, **en ce que** le matériau en plastique injectable (35) est un matériau en plastique renforcé par des fibres de verre qui peut être connecté par engagement par liaison de matière par moulage par injection avec la matrice thermoplastique et **en ce que** le degré de remplissage des fibres de verre dans le matériau en plastique injectable (35) est différent d'au plus 40 % du degré de remplissage des fibres de verre dans les mats (14).
